(19) Europäisches Patentamt
European Patent Office
Office européen des brevets

(11) **EP 1 772 263 B1**

(12) **EUROPÄISCHE PATENTSCHRIFT**

(45) Veröffentlichungstag und Bekanntmachung des Hinweises auf die Patenterteilung:
**07.08.2013 Patentblatt 2013/32**

(51) Int Cl.:
*B41F 13/004* *(2006.01)* *G05B 19/414* *(2006.01)*
*B65H 45/12* *(2006.01)*

(21) Anmeldenummer: **05021966.6**

(22) Anmeldetag: **07.10.2005**

(54) **Rotationsdruckmaschine und Verfahren des Betriebs einer Rotationsdruckmaschine**

Rotary press and process of operation thereof

Presse rotative et son procédé de fonctionnnement

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**11.04.2007 Patentblatt 2007/15**

(73) Patentinhaber: **Bosch Rexroth AG
70184 Stuttgart (DE)**

(72) Erfinder:
• **Peters, Klaus, Dr.
97816 Lohr am Main (DE)**
• **Staub, Dieter
97848 Rechtenbach (DE)**

(56) Entgegenhaltungen:
EP-A- 0 930 552        WO-A-97/11848
DE-A1- 10 243 454     US-A- 5 309 834

**Beschreibung**

Die Erfindung betrifft ein Verfahren des Betriebs einer Rotationsdruckmaschine nach dem Oberbegriff des Anspruchs 1.

Eine solche Rotationsdruckmaschine bedruckt und bearbeitet zumindest eine Materialbahn, zum Beispiel Papier, insbesondere Zeitungspapier, zum Beispiel für eine Tageszeitung. Zum Bedrucken sind Druckwerke und/oder Druckwerksgruppen vorhanden, in denen angetriebene Druckzylinder Materialbahnen bedrucken. Zum Bearbeiten kann beispielsweise ein Perforieren, aber auch das abschließende Schneiden, Falzen und Zusammenlegen in einem Falzapparat gemeint sein, welcher ebenfalls Bestandteil einer erfindungsgemäßen Rotationsdruckmaschine ist. Zum Transport der zumindest einen Materialbahn durch die Rotationsdruckmaschine in den zumindest einen Falzapparat - der die Produktion eines zusammenhängenden Produktionsverbunds abschließt und vervollständigt - sind des weiteren Transportelemente vorgesehen. Diese können zum Beispiel Zugwalzen im Oberbau vor den Falzapparaten, Strangzugwalzen im Falzapparat, Einzugswerke oder Rollenwechsler sein. Mit Transportelement ist allgemein ein Element gemeint, welches die Materialbahn fuhrt und/oder transportiert und/oder lenkt und/oder mit der Materialbahn zusammenwirkt und/oder die Materialbahn speichert, zum Beispiel auch dynamisch speichert oder ein Rollenwechsler, in dem zum Beispiel eine Papierrolle mit der aufgerollten Materialbahn für die Produktion enthalten ist.

Die erfindungsgemäße Rotationsdruckmaschine weist dabei zumindest einen Falzapparat, Druckwerke und/oder Druckwerksgruppen und Transportelemente auf, die zumindest teilweise mechanisch unabhängig voneinander elektrisch angetrieben sind. Einige oder alle der genannten Elemente/Aggregate sind demzufolge nicht durch eine mechanisch durchgängige Welle miteinander gekoppelt, sondern durch mehrere, mechanisch unabhängig voneinander arbeitende elektrische Antriebe (bestehend zum Beispiel aus Antriebsregler und Elektromotor) elektrisch angetrieben. Die genannten Elemente/Aggregate werden dabei im Druckbetrieb durch Sollwertvorgaben zumindest einer Leitachse mit einem elektronisch generierten Synchronisationstakt synchronisiert.

Die Leitachse kann dabei zum Beispiel eine kinematische Nachbildung einer "virtuellen" mechanischen Welle sein, welche die genannten Elemente mechanisch koppeln würde. Der Synchronisationstakt kann dabei in Echtzeit erzeugt und verteilt werden, und zwar sowohl zeitlich als auch hinsichtlich der Positions/Bewegungssollwert-Genauigkeit. Das hochgenaue Leitachssignal, welches zum Beispiel aus Positionssollwerten, Geschwindigkeitssollwerten oder anderen bewegungsrelevanten Sollwerten in zeitlich vorbestimmter Abfolge bestehen kann, wird vorzugsweise über einen Echtzeitbus an die verschiedenen Elemente und/oder Aggregate verteilt. Hierauf wird weiter unten noch näher eingegangen.

Es ist ein bekanntes Verfahren für Rotationsdruckmaschinen mit einer oder mehreren Bahnen, mit z.B.

einzeln angetriebenen Druckwerken oder Druckwerksgruppen,

einem oder mehren einzeln angetriebenen Falzapparaten,

weiteren nicht weiter beschriebenen Bearbeitungsstationen und

einzeln angetriebenen Zugwalzen im Oberbau vor den Falzapparaten,

einzeln angetriebenen Strangzugwalzen im Falzapparat,

einzeln angetriebenen Einzugswerken

einzeln angetriebenen Rollenwechslern,

alle Einzelantriebe an den Bahnen, die in den selben Falzapparat laufen, einer so genannten virtuellen Produktions-Leitachse zuzuordnen und in elektronischer Winkelsynchronisation folgen zu lassen.

Eine virtuelle Leitachse ist die in einer Steuerung berechnete Positionsreferenz ($\Phi_{LA}$ = Lagesollwert) für die zugeordneten Einzelantriebe, die sich proportional zur gewünschten Maschinengeschwindigkeit bewegt. Diese Positionsreferenz wird den Antrieben über schnelle Echtzeitbussysteme und ggf. weitere zwischengeschaltete Gruppensteuerungen gleichzeitig (synchron) übermittelt. Die Einzelantriebe folgen diesem Lagesollwert mit Hilfe ihrer eigenen digitalen Lageregelung. Um die Einzelantriebe in ihrer Winkellage zur durchlaufenden Bahn einzustellen, wird für jeden Einzelantrieb zusätzlich ein individueller Winkeloffset $\Delta\Phi_i$ berechnet und zur aktuellen Leitaclisposition hinzu addiert. Der Gesamtlagesollwert eines Einzelantriebs ergibt sich so zu

$$\Phi_i = (\Phi_{LA} + \Delta\Phi_i)$$

Die Berechnung der individuellen Werte für den Winkeloffset $\Delta\Phi_i$ erfolgt beispielsweise in Leitstandsrechnern in Kenntnis der gewählten Bahnführung für die Produktion und der dabei zurückgelegten Bahnwege zwischen den einzeln angetriebenen Bearbeitungsstationen. Die Übermittlung der Offsetwerte erfolgt ebenfalls über einen geeigneten Datenbus, zwischen den Leitständen und den Steuerungen des Antriebssystems.

Für Druckwerksgruppen werden die Winkeloffsetwerte der Antriebe so berechnet, dass sich ein registergenauer Farbdruck ergibt, für den Antrieb des Falzapparates z.B. ein Winkeloffset $\Delta\Phi_F$, der den Schneidzylinder in die gewünschte Position für das Schnittregister (Lage des Trennsehnittes zum Seitenanfang) bringt.

Grundsätzlich muss durch das Steuerungssystem für die Antriebe die Aufgabe erfüllt werden, alle Einzelantriebe an den Bearbeitungsstationen in diese Positionen entsprechend der Winkeloffsetwerte für die korrekten Register zu bewegen. Dies geschieht möglichst schon vor dem Start der Produktion, um Makulatur zu vermeiden (Preset, Voreinstellung der Maschine).

In dem "Dezentralen Antriebssystem zur Synchronisierung von wellenlosen Druckmaschinen" der Firma Bosch Rexroth Electric Drives and Controls GmbH wird diese Aufgabe in den Einzelantrieben des Systems durch die Funktion "dynamisches Aufsynchronisieren" selbstständig (antriebsgeführt) erledigt:

Die Antriebe bewegen sich selbsttätig, antriebsgeführt auf ein Kommando hin, aus beliebiger Ausgangsposition auf die Zielposition = aktuelle Leitachsposition + Winkeloffset,

$$\Phi_i = (\Phi_{LA} + \Delta\Phi_i).$$

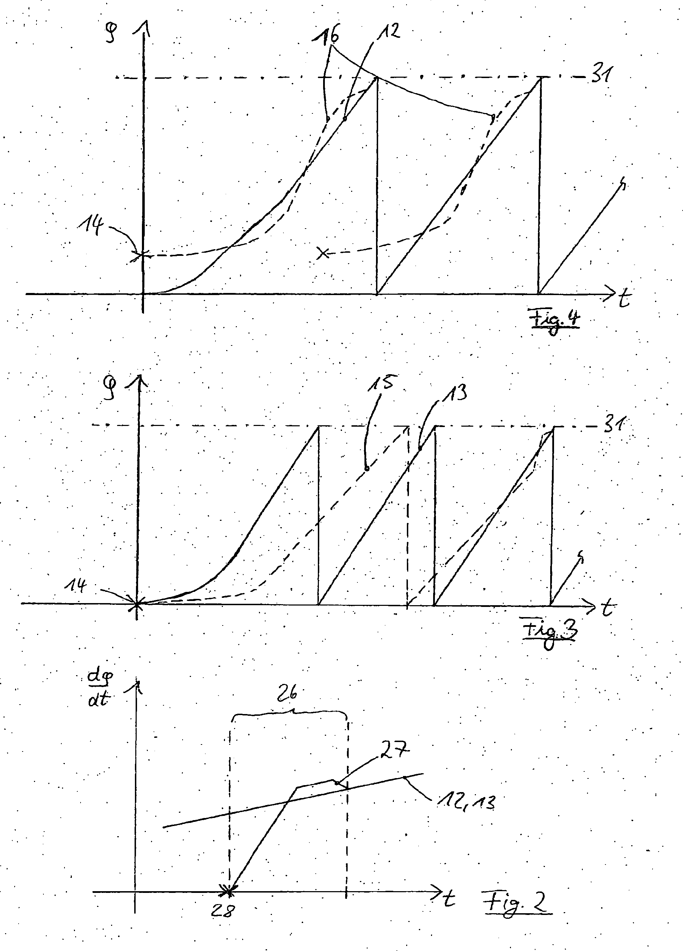

Für diesen Vorgang ist es unerheblich, ob die Leitachse $\Phi_{LA}$ sich noch im Stillstand befindet, oder ob die Leitachse (und damit die Einzelantriebe und die gesamte Maschine) schon in Bewegung ist. Zur Erläuterung des prinzipiellen Ablaufs gibt Fig. 2 die Geschwindigkeiten während des "dynamischen Aufsynchronisierens" wieder.

Ob und wann im Ablauf zur Vorbereitung und zum Start einer Maschine diese Bewegungen für das Aufsynchronisieren ausgeführt werden können, wird also nicht durch die Eigenschaften des Antriebssystems festgelegt, sondern durch die besonderen Randbedingen und Einschränkungen der Bearbeitungsprozesse in der Maschine:

Die Druckwerke in Maschinen der beschriebenen Art können zu jeder Zeit aufsynchronisieren, solange sie sich noch in der Stellung "Druck Ab" befinden, d. h. die Druckzylinder noch nicht im Kontakt mit dem Bedruckstoff (Bahn) befinden.

Die EP 0 930 552 A2 zeigt eine Druckmaschine mit einer verteilten, virtuellen Leitachse, bei der die Möglichkeit besteht, in einzelnen Sektionsnetzwerken erzeugte virtuelle Leitachsen von einer Sektion auf eine oder mehrere andere Sektionen zu übertragen. Zu diesem Zweck sind die einzelnen Antriebseinheiten über mehrere, in sich geschlossene Signalverarbeitungsnetzwerke, die jeweils mehrere Signalverarbeitungsrechner als Knoten aufweisen, verbunden, wobei die Signalverarbeitungsnetzwerke zur bidirektionalen Kommunikation untereinander ausgebildet sind. Es wird offenbart, eine virtuelle Leitachse in einer Antriebssteuerung zu erzeugen und über die Signalverarbeitungsnetzwerke an beliebige Antriebseinrichtungen zu übertragen. Ein Aufsynchroniziervorgang wird jedoch nicht behandelt.

Aus der DE 102 43 454 B4 ist ein Verfahren der Eingangs genannten Art bekannt, wobei dort vorgeschlagen wird, dass als Startwert der sog. "virtuellen" Leitachse die aktuelle Istwertposition des Falzapparates verwendet wird. Nachteilig ist dabei, dass praktisch die gesamte Druckmaschine hierbei ungünstige, von der aktuellen Position bzw. vom aktuellen Bewegungszustand vieler Elemente abweichende Anfangs-Bewegungssollwerte enthalten können; zusätzlich verfügt ein solches Verfahren über eine geringere Flexibilität und Dynamik sowie über Konfigurationseinschränkungen, da es auf lediglich einen Falzapparat bezogen ist. Des weiteren gibt es bei diesem Verfahren auch eine relativ geringe Genauigkeit und große Einschränkungen bezüglich der Dynamik; so wird bei dem Verfahren - gemäß den mechanischen Einschränkungen des Falzapparates - das ganze System der Rotationsdruckmaschine nur sehr langsam anfahren können, um einen Bahnriss zu vermeiden.

Dieses Verfahren des Setzens der Anfangsposition lässt sich darüber hinaus aber nur dann anwenden, wenn alle Bahnen mit den zugeordneten Druckwerken oder Druckwerksgruppen nur in jeweils einen Falzapparat laufen.

Wird für Produktionen nach dem Bedrucken der Bahn durch eine Druckwerksgruppe die Bahn geteilt und zwei verschiedenen Falzapparaten zugeführt, steht diese Lösung nicht mehr zur Verfügung. Die Leitachsposition für diese Druckwerksgruppe kann nach dem beschriebenen Verfahren nur auf die Position eines ersten Falzapparates gesetzt werden. Der zweite Falzapparat muss dann zwangsläufig auf die Zielposition der so voreingestellten Produktions-Leitachse plus dem errechneten Winkeloffset für sein eigenes Schnittregister aufsynchronisieren.

Es ist daher Aufgabe der vorliegenden Erfindung, die Dynamik der Rotationsdruckmaschine zu erhöhen.

Des weiteren ist es Aufgabe, eine höhere Flexibilität der Maschinenkonfiguration zu gestatten.

Des Weiteren soll insgesamt eine erhöhte Genauigkeit gewährleistet werden.

Des weiteren sollen mechanische Einschränkungen - insbesondere mechanische Einschränkungen aufgrund der komplexen Mechanik eines Falzapparates - vermieden oder zumindest verringert werden.

Schließlich hat die beanspruchte Lösung das Ziel, das Aufsynchronisieren eines Falzapparates auf beliebige Werte des Winkeloffsets $\Delta\Phi_F$ zur Einstellung des Schnittregisters bei bereits eingezogenen Bahnen bei beliebigen virtuellen Leitachspositionen zu ermöglichen und diesen Vorgang genau so schnell abzuschließen wie den Aufsynchroniziervorgang der Druckwerke.

Diese Aufgaben werden gelöst durch die Merkmale des Anspruchs 1.

Die Erfindung bietet den Vorteil, dass die Dynamik und Konfigurationsflexibiliät der Rotationsdruckmaschine erhöht wird. Gleichzeitig wird eine konsistentere Sollwertführung und auch ein konsistenterer Betrieb der Rotationsdruckmaschine dadurch gewährleistet, dass das elektromechanische Konzept der virtuellen Leitachse bei der Erfindung konsequent umgesetzt wird.

Diese Vorteile werden dadurch erreicht, dass zumindest ein Falzapparat, von (s)einem Initialzustand ausgehend, in welchem die Leitachse einerseits und die Stellung und/oder der Bewegungszustand des Falzapparates andererseits voneinander unabhängig sind, durch Ausgleichsbewegungen seinen Initialzustand an die Sollwertvorgaben der Leitachse angleicht (aufsynchronisiert).

Der Falzapparat synchronisiert also von seinem Initialzustand auf die (insbesondere übergeordnete Haupt-)Leitachse - insbesondere dynamisch - auf. Der Initialzustand entspricht dabei einem bestimmten Bewegungs- und/oder Positionszustand, also zum Beispiel einer Konstantbewegung bzw. -drehung oder einer (Winkel-)Stellung. In diesem Initialzustand sind Leitachse einerseits und Stellung und/oder Bewegungszustand des Falzapparates andererseits voneinander unabhängig. Als Bezugselement kommt zum Beispiel der Antrieb, also zum Beispiel Elektromotor und Antriebsregler des Schneidzylinders eines Falzapparates in Frage. Dann wäre entsprechend die Stellung und/oder der Bewegungszustand des Schneidzylinders bzw. des Elektromotors - zum Beispiel zu ermitteln am Istwertgeber des Elektromotors - für die Stellung und/oder den Bewegungszustand "des Falzapparates" in Frage.

Vorzugsweise synchronisiert der zumindest eine Falzapparat unter einer Bewegung auf, d.h. im Bewegungszustand, insbesondere während des Bewegungszustandes, weiter vorzugsweise dynamisch.

Durch die Erfindung wird der Falzapparat in das Gesamtkonzept einer virtuellen Leitachse einer Rotationsdruckmaschine als Slave komplett mit einbezogen. Die Dynamik erhöht sich dadurch, dass eine (insbesondere übergeordnete) Leitachse das gesamte Verhalten modelliert und/oder steuert und nicht von einem bestimmten Aggregat abhängig ist. Des' weiteren erhöht sich die Konfigurationsflexibilität dadurch, dass zum Beispiel mehrere Falze, d.h. insbesondere mehrere Produktionen, die zu synchronisieren sein können, und die vor Produktionsbeginn unreferenziert zueinander sind, nunmehr einfach in das Gesamtkonzept einbezogen werden können.

Insbesondere können auch beliebige Anfangs-Bewegungssollwerte nach Dynamik-Gesichtspunkten (und nicht z.B. durch die kinematischen Einschränkungen des Falzapparates) vorgegeben sein.

Zum Beispiel könnte auch eine Bahn während des Produktionsvorgangs oder vor dem Produktionsvorgang oder nach dem Produktionsvorgang längs geteilt werden und schließlich die resultierenden Teilbahnen jeweils unterschiedlichen Falzapparaten zugeführt werden. In diesem Fall zeigt sich die besondere Flexibilität der Erfindung dadurch, dass diese Konfiguration ohne weiteres mit dem erfindungsgemäßen Verfahren realisiert werden kann.

Wenn zumindest während des Aufsynchronisierens des Falzapparates die Transportelemente, die in diesen Falzapparat transportieren, auf den Falzapparat bezogene, spezifische Sollwertvorgaben erhalten, die von dem Verlauf der Sollwertvorgaben der zumindest einen Leitachse zumindest zeitweise abweichen, und diesen spezifischen Sollwertvorgaben folgen, so dass die Transportelemente während des Aufsynchronisierens des Falzapparates eine zu dessen Bewegung während des Aufsynchronisierens winkel- und/oder geschwindigkeitssynchrone Bewegung ausführen, werden insbesondere bei trägerer Mechanikkonfiguration bei bereits eingespannter Materialbahn übermäßige Bahnspannungen sowie auch ein Bahnriss oder eine Sackbildung oder Schlaufenbildung, ein Knicken oder ein sonstiges Beeinträchtigen der Materialbahn verhindert bzw. minimiert. Zudem sind die Transportelemente dann an den maßgeblichew Falzapparat gekoppelt und vollziehen keine überflüssigen Bewegungen nach, wie z. B. das Aufsynchronisieren der Druckwerke auf eine virtuelle Leitachse. Dadurch sind die Transportelemente praktisch automatisch und in jedem Moment (geschwindigkeits- und/oder winkel-) synchron mit dem relevanten Falzapparat, und die Druckwerke vollziehen eine spezifische Aufsynchronisierbewegung unabhängig und ohne Einschränkungen, die beispielsweise durch Falzapparat und/oder Transportelemente der virtuellen Leitachse aufgeprägt sein können.

Dazu werden insbesondere Gruppen aus. Transportelementen gebildet, die in den aufsynchronisierenden Falzapparat transportieren. Die spezifischen Sollwertvorgaben beziehen sich insbesondere derart auf den Falzapparat, dass die Transportelemente, die diese spezifischen Sollwertvorgaben erhalten, während des Aufsynchronisierens des Falzapparates eine zu dessen Bewegung während des Aufsynchronisierens winkel- und/oder geschwindigkeitssynchrone Bewegung ausführen.

Insbesondere können die Transportelemente lagegeregelt oder auch geschwindigkeitsgeregelt sein. Wenn sie geschwindigkeitsgeregelt sind, können sie auch Positions-Sollwertvorgaben erhalten, aus denen dann die Geschwindigkeitswerte für die Antriebe abgeleitet werden können. Bei geschwindigkeitsgeregeltem Antrieb der Transportelemente fallen eventuelle Offsets der Transportelemente fort und verkomplizieren damit nicht den Regel- bzw. Sollwertführungsvorgang. Dies ist insbesondere bei den oben genannten Transportelementen möglich, da diese in der Regel nicht in einem Registerverhältnis, insbesondere nicht in einem eindeutigen Positionsbezug zu der Materialbahn stehen müssen. Vorzugsweise bearbeiten die Transportelemente die Materialbahn nicht und bedrucken diese auch nicht.

Vorzugsweise erhalten lediglich, d.h. ausschließlich, diejenigen der Transportelemente, die in den betreffenden Falzapparat transportieren, die oben genannten, spezifischen Sollwertvorgaben. Andere Transportelemente der Rotationsdruckmaschine, die in einen anderen Falzapparat transportieren, erhalten zum Beispiel andere spezifische Sollwertvorgaben, die auf den anderen Falzapparat bezogen sind. Wesentlich ist, dass durch die vorgeschlagene Ausgestaltung autonome Gruppen von Transportelementen gebildet werden, die auf die anderen Aggregate, Antriebe und Teile der Rotationsdruckmaschine keine Rückwirkung haben. Insbesondere können die Druckwerke frei und unabhängig von der Falzbewegung und unabhängig von der Transportelement-Bewegung ihren eigenen Aufsynchronisier-Vorgang durchführen.

Eine zu hohe Materialbahnbeanspruchung wird sicher und ohne Beeinträchtigung des Druckergebnisses dadurch erreicht, dass die spezifischen Sollwertvorgaben mit einer Momentanstellung und/oder Momentangeschwindigkeit des Falzapparates korrespondieren. Ein konstruktiv einfacher Aufbau ist gegeben, wenn die spezifischen Sollwertvorgaben aus dem Istwert eines Positionsgebers des Falzapparates, insbesondere kontinuierlich, abgeleitet werden. Dies kann zum Beispiel ein Positionsgeber an einem Elektromotor des Falzapparates, zum Beispiel der Schneidtrommel, sein. Kontinuierlich kann eine Echtzeitableitung und -weiterleitung der Sollwertvorgaben bedeuten.

Die Steuerungs- und Antriebskonfiguration einer Rotationsdruckmaschine wird dadurch besonders effizient ausgenutzt, dass die spezifischen Sollwertvorgaben aus dem Initialzustand des Falzapparates abgeleitet werden. Dabei wird von der Logistik des Steuerungs- und Antriebssystems, welche ohnehin vorhanden ist, sehr effizient Gebrauch gemacht. Insbesondere ist vorgesehen, dass die spezifischen Sollwertvorgaben von einer spezifischen Leitachse mit einem elektronisch generierten Synchronisationstakt erzeugt werden, wobei auch der Falzapparat der spezifischen Leitachse folgt, und der Startwert der spezifischen Leitachse dem Initialzustand des Falzapparates entspricht, und dass die spezifische Leitachse auf die Leitachse dynamisch aufsynchronisiert. Dann ist die Konfiguration sehr einfach, da auch der Falzapparat - wie alle anderen Aggregate - der spezifischen Leitachse (als Slave) folgt. Ein heutiges Steuerungs- und Antriebssystem ist ohne weiteres dazu geeignet, eine spezifische Leitachse auf die Leitachse dynamisch, insbesondere in der Bewegung, aufsynchronisieren zu lassen.

Apparativ besonders einfach ist das Verfahren ausgestaltet, wenn vor dem Anfahren des Falzapparates der Istwert eines Positionsgebers des Falzapparates ausgelesen und daraus der Startwert abgeleitet wird, insbesondere dass eine in einer Antriebssteuerung vorhandene Steuerung, insbesondere eine SPS, und/oder ein Leitsystem, insbesondere eine SPS des Leitsystems, das Auslesen und die Ableitung des Istwertes steuert. Dies bedeutet, dass eine Steuerung oder ein Leitsystem zum Beispiel den Vorgang des Auslesens initiiert oder selber den Istwert des Positionsgebers ausliest und den Vorgang der Ableitung bzw. der Weiterleitung des Istwertes an die Antriebssteuerung, die die spezifische Leitachse erzeugt, initiiert, steuert oder selber vornimmt. Die Antriebssteuerung kann dann von diesen Aufgaben entlastet sein, und zwar sowohl hinsichtlich der Kapazität, als auch apparativ (d.h. die Antriebssteuerung oder deren Module müssen eine solche Funktionalität nicht vorsehen; wenn sie vorhanden ist, muss sie nicht genutzt werden).

Die vorgenannten Ausgestaltungen des Verfahrens sind für eine Rotationsdruckmaschine generell verwendbar Bei besonders umfangreichem Maschinenaufbau, z.B. mit großer Trägheit aufgrund der hohen, beteiligten Massen, oder um die Konfigurationsflexibilität bzw. Rüstzeiten zu verbessern, wird vorgeschlagen, dass während des Aufsynchronisierens des Falzapparates die entsprechenden Materialbahnen in die Transportelemente eingeführt sind und die Transportelemente diese Materialbahnen bereits mittransportieren.

Um während dieses Vorgangs die benötigte Aufsynchronisierzeit möglichst effizient zu nutzen, wird vorgeschlagen, dass während des Aufsynchronisierens des Falzapparates alle Druckspalte der in diesen Falzapparat arbeitenden Druckwerke oder Druckwerksgruppen geöffnet sind und die entsprechenden Materialbahnen in die Transportelemente eingeführt sind und die Transportelemente diese Materialbahnen bereits mittransportieren.

Sind vor dem Start einer Produktion die Bahnen bereits durch den Oberbau und sämtliche Zugwerke in den Falzapparat eingeführt, soll dieser sich nicht mehr unabhängig für das Aufsynchronisieren bewegen. Es besteht die Gefahr, dass die Bahnen bei dieser Bewegung reißen, weil sich alle Walzen, die für den Transport der Bahn durch die Maschine sorgen, insbesondere die Zugwalzen im Oberbau, ggf. Einzugswerke und die Strangzugwalze vor dem Messerzylinder, wenn sie einen Einzelantrieb hat, nicht um die selben Bahnwege entsprechend der Winkelkorrektur um den Winkeloffset mitbewegen.

Im eingangs genannten Stand der Technik muss dabei der rechnerische Wert der virtuellen Produktions-Leitachse bereits vor dem Anfahren der Maschine einmalig auf die Position des Falzapparates gesetzt werden (Leitachspreset), die er im Stillstand der Maschine eingenommen hat. Ein Aufsynchronisieren des Falzapparates für eine Korrektur der Falzposition vor dem Beginn der Produktion ist dann nicht mehr notwendig, wenn diese gesetzte Position der virtuellen Leitachse der Lage des Schneidzylinders und damit dem Schnittregister entspricht. Der Winkeloffset für den Falzapparat $\Delta\Phi_F$ ist in diesem Fall gleich Null. Das Reißen der Bahnen wird so sicher verhindert. Die eingangs genannten Nachteile werden dabei aber in Kauf genommen und entfallen mit der Erfindung auch bei eingeführten Materialbahnen.

Die beanspruchte Lösung stellt ein allgemein nutzbares Verfahren zur Voreinstellung der Schnittregister in der Maschine dar und kann sowohl für die regulären Produktionen mit jeweils einem Falzapparat als auch für die besonderen Produktionen mit geteilten Bahnen in zwei Falzapparate genutzt werden.

Die erfindungsgemäße Lösung erreicht ihre Flexibilität dadurch, dass alle einzeln angetriebenen Zugwerke und Transportelemente an den Bahnen in den Synchronisiervorgang des Falzapparates mit einbezogen werden. Das sind z.B.:

Die Zugwalzen im Oberbau,
die Zugwalzen vor dem Trichter,
die Strangzugwalzen vor den Messerzylindern,
die Einzugswerke vor den Druckwerksgruppen,
und optional auch die Rollenwechsler.

Alle diese am Bahntransport beteiligten Aggregate erhalten Lagesollwerte, die in der Weise berechnet sind, dass sie der Bewegung des Falzapparates beim Aufsynchronisieren in Lage und Geschwindigkeit identisch entsprechen. Bei der heute bekannten Lösung folgen diese Zugelemente allein der Position der virtuellen Produktionsleitachse, die sich beim Aufsynchronisieren des Falzapparates noch im Stillstand befinden kann, oder eine beliebige Maschinengeschwindigkeit vorgibt. Die synchrone Bewegung von Falz und Zugelementen dagegen sorgt dafür, dass zwischen diesen Aggregaten auch beim Aufsynchronisieren keine Wegdifferenzen aufgebaut werden. Wegdifferenzen und die damit verursachten Bahndehnungen erzeugen Zugspannungserhöhungen in der Bahn und verursachen letztlich den Riss einer oder aller Bahnen.

Auch die Druckwerke oder Druckwerksgruppen nutzen die zur Verfügung stehende Zeit des Aufsynchronisierens sehr effizient aus, wenn während des Aufsynchronisierens des Falzapparates die Druckwerke oder Druckwerksgruppen durch Ausgleichsbewegungen ihren Bewegungszustand und/oder ihre Momentanpositionen an die Sollwertvorgaben der Leitachse angleichen. Eine während des Druckbetriebes praktisch einheitliche (zum Beispiel bezogen auf eine Produktion bzw. auf einen Falzapparat) Leitachse wird dadurch gewährleistet, dass nach dem Aufsynchronisieren des Falzapparates der Falzapparat und die Transportelemente, die in diesen Falzapparat transportieren, den Sollwertvorgaben der Leitachse folgen. Dann ist während des Druckbetriebs, nach dem Aufsynchronisieren des Falzapparates und/ oder der Transportelemente keine zusätzliche Sollwertgenerierung mehr erforderlich.

Besonders bevorzugt ist es, wenn die Druckmaschinenkonfiguration, der zumindest eine Falzapparat, welcher dynamisch aufsynchronisiert, und insbesondere für das Aufsynchronisieren des Falzapparates relevante Betriebsparameter, von einem übergeordneten Leitsystem vorgegeben werden. Das übergeordnete Leitsystem kann ein Leitstand sein, der zum Beispiel auch eine' SPS beinhaltet. Dieser Leitstand kommuniziert mit dem Steuerungs- und Antriebssystem der Druckmaschine und liefert zum Beispiel für das Aufsynchronisieren des Falzapparates relevante Betriebsparameter, wie zum Beispiel die Geschwindigkeit der Leitachse während des Hochfahrens der Rotationsdruckmaschine, Grenzparameter für die Bewegung der Antriebe, Bahnführungssollwerte etc. Von dem Leitsystem vorgegeben sind überdies auch Druckmaschinenkonfiguration und damit auch der zumindest eine Falzapparat, der aufsynchronisiert. Die Konfiguration und der Falzapparat, d.h. auch die unterschiedlichen Produktionen und deren Interaktionen werden durch das übergeordnete Leitsystem vorgegeben.

Die Erfindung betrifft außerdem eine Antriebsvorrichtung einer Rotationsdruckmaschine nach dem Oberbegriff des Anspruchs 14. Dafür gelten die. Eingangs genannten Ausführungen zum Stand der Technik und zu den Aufgaben entsprechend. Die oben genannten Aufgaben werden bei der genannten Antriebsvorrichtung gelöst durch die Merkmale des Anspruchs 14.

Hervorzuheben ist, dass eine Antriebssteuerung eine Leitachse generiert, wobei ebenfalls eine oder die selbe Antriebssteuerung dazu vorgesehen ist, eine auf den Falzapparat bezogene spezifische Leitachse zu erzeugen. Diese spezifische Leitachse vermag die betreffende Antriebssteuerung selektiv und zumindest temporär an zumindest einen Antriebsregler des zumindest einen Falzapparates und/oder an zumindest einen Antriebsregler der Transportelemente, die in den Falzapparat transportieren, zu kommunizieren. Dadurch werden bei einfachem Aufbau der Kommunikationstopologie eine effiziente Kommunikation und die oben genannten Vorteile realisiert. Für die Ansprüche 15 bis 21 gilt das oben erwähnte entsprechend.

Die Eingangs genannten Aufgaben werden des weiteren gelöst mittels einer Rotationsdruckmaschine nach Anspruch 22. Dafür gilt das hier vorgesagte ebenfalls entsprechend.

Die Erfindung wird im Folgenden anhand von Ausführungsbeispielen, die lediglich schematischen und teilweisen lediglich instruktiven Charakter haben, näher erläutert. Es zeigen:

Figur 1 eine grob schematische Darstellung einer Rotationsdruckmaschine mit Antriebs- und Steuerungsvorrichtung, welche auch zur Ausübung des erfindungsgemäßen Verfahrens konfiguriert ist,

Figur 2 ebenfalls grob schematisch einen Aufsynchronisier-Vorgang in der Darstellung Geschwindigkeit über Zeit,

Figur 3 einen spezifischen Aufsynchronisier-Vorgang in der Darstellung Winkel, also Position, über der Zeit,

Figur 4 einen weiteren, spezifischen Aufsynchronisier-Vorgang, ebenfalls in der Darstellung Winkel/ Position über der Zeit.

Alle oben genannten Figuren sind lediglich zur Erläuterung grob schematische Prinzipzeichnungen. Sofern im Folgenden nichts anderes gesagt ist, beziehen sich alle Bezugszeichen stets auf alle Figuren.

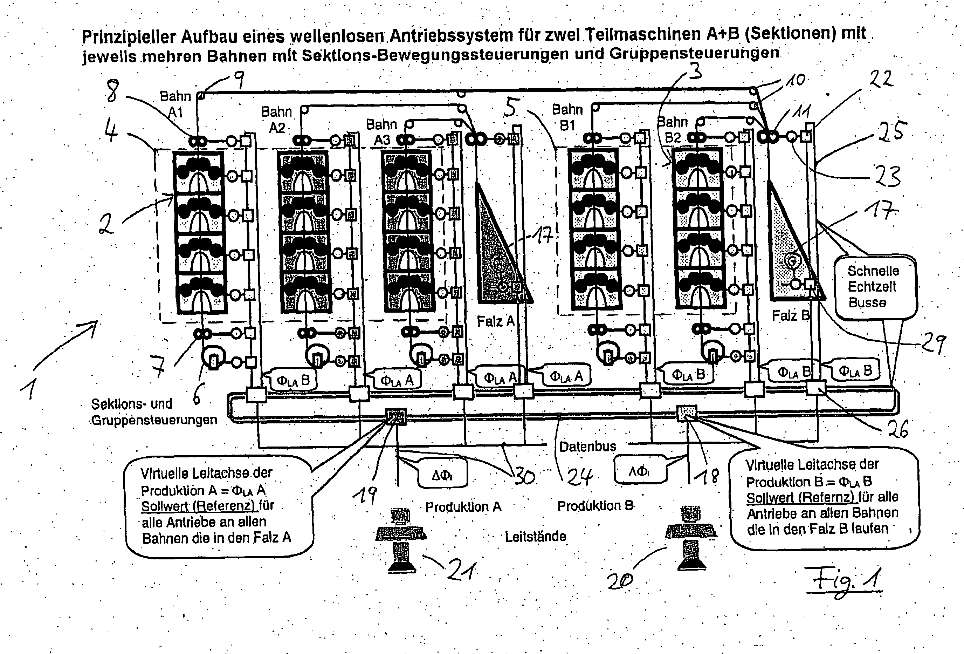

Figur 1 zeigt eine erfindungsgemäße Rotationsdruckmaschine 1, die dazu vorgesehen ist, die Materialbahnen A1, A2, A3, B1, B2 zu bedrucken und zu bearbeiten, zum Beispiel zu schneiden, zu falzen und als fertiges Produkt auszulegen. Zum Schneiden, Falzen und Auslegen sind die Falzapparate A, B vorgesehen. Zum Bedrucken sind Druckwerke 2, 3 vorhanden, die Druckwerksgruppen 4, 5 bilden. Die Druckwerksgruppen 4, 5 können beispielsweise jeweils vier Druckwerke für eine Materialbahn, die im Vierfarbdruck zu bedrucken ist, vorsehen.

Die Materialbahnen A1, A2, A3; B1, B2 werden mit Transportelementen 6, 7, 8, 9, 10, 11 durch die Rotationsdruckmaschine 1 in den zumindest einen Falzapparat A, B transportiert. Transportelemente in diesem Sinne sind beispielhaft Rollenwechsler 6, Einzugswerk 7, Einzugswerk 8, Zugwalzen 9, 10 sowie die Strangzugwalzen 11. Vorliegend werden diese Elemente - obgleich es sich zum Beispiel beim Rollenwechsler nicht um ein Transportelement im klassischen Sinne handelt, das gleiche gilt zum Beispiel für einen hier nicht gezeigten dynamischen Bahnspeicher - der Einfachheit halber als Transportelemente 6 bis 11 bezeichnet.

Die Falzapparate A, B, die Druckwerke 2, 3 bzw. die Druckwerksgruppen 4, 5 und die Transportelemente 6 bis 11 sind zumindest teilweise mechanisch unabhängig voneinander elektrisch angetrieben. Dies bedeutet insbesondere, dass einzelne oder alle der genannten Elemente voneinander mechanisch unabhängig angetrieben sind. Kopplung zwischen einzelnen Elementen kann durch mechanische Getriebe erfolgen. Die mechanisch unabhängig voneinander angetriebenen Elemente sind im Druckbetrieb durch Sollwertvorgaben zumindest einer Leitachse 12, 13 (siehe Figuren 2 bis 4) mit einem elektronisch generierten Synchronisationstakt zu synchronisieren.

Die mechanisch unabhängigen (insbesondere nicht durch Kupplungen, mechanische Wellen oder Achsen oder mechanische Getriebe miteinander in Wirkverbindung stehenden) Elemente werden einzeln oder in zusammen gefassten Gruppen von Elementen mittels jeweils eines Elektromotors 23 angetrieben, dessen Bewegungsregelung und Stromversorgung von zugehörigen Antriebsreglern 22, 29 gewährleistet ist.

Da einzelne Elemente oder Gruppen von Elementen voneinander mechanisch unabhängig elektrisch angetrieben sind, müssen diese - um die ordnungsgemäße Bedruckung und Bearbeitung gewährleisten zu können, untereinander in durch die Rotationsdruckmaschinenkonfiguration vorgeschriebenen Beziehungen stehen, also synchronisiert sein. Dazu wird der elektronisch zum Beispiel in einer Antriebssteuerung 18, 19 generierte Synchronisationstakt über einen schnellen Echtzeitbus 24 (Querkommunikation) an andere Antriebssteuerungen 18, 19, 26 übertragen. Einige der Antriebssteuerungen 26 übertragen dann den übermittelten Synchronisationstakt - ebenfalls in Echtzeit - an zugehörige Antriebsregler 22, 29 der Elemente bzw. Aggregate und zwar über den ebenfalls schnellen Echtzeitbus 25 (Antriebs-Kommunikationsstrang).

Für die schnellen Echtzeitbusse 24, 25 kommen zum Beispiel Busse nach dem SERCOS-Standard in Frage.

Die gesamte Rotationsdruckmaschinen-Konfiguration ist sehr flexibel zu gestalten. In dem gezeigten Ausführungsbeispiel der Figur 1 arbeitet die äußerst links dargestellte Druckwerksgruppe 4 mit der Materialbahn A1 in den Falz B, wohingegen die beiden rechts sich anschließenden Druckwerksgruppen 4 die Bahn A2, A3 in den Falz A bearbeiten. Die restlichen beiden Druckwerksgruppen 5 arbeiten jeweils in den Falz B. Diese Druckmaschinenkonfiguration wird einerseits durch die mechanische Vorrüstung der Maschine vorgegeben (zum Beispiel wird die Bahn A1 über die Zugwalzen 9, 10 eingespannt und in den Falz B geführt). Die gesamte Druckmaschinenkonfiguration wird vorgegeben über die Leitstände 20, 21. Die Leitstände 20, 21 sind mit den Antriebssteuerungen 18, 19, 26 über einen - nicht notwendigerweise voll echtzeitfahigen - Kommunikationsstrang 30 verbunden. Dies kann beispielsweise ein Kommunikationsstrang nach dem ARCNET-Standard sein.

Wesentlich für die Erfindung ist noch, dass die Materialbahnen A1, A2, A3; B1, B2 jeweils nach der vorgegebenen Druckmaschinenkonfiguration vorbestimmt in den Falz A, B zusammenlaufen und dort weiterbearbeitet, d.h. insbesondere geschnitten, gefalzt und ausgelegt werden. Für den Transport durch die Rotationsdruckmaschine in die Falzapparate A, B sind die Transportelemente vorgesehen.

Die folgende Beschreibung erfolgt unter gleichzeitiger Bezugnahme auf alle Figuren.

Vorzugsweise bei einem Neustart nach einer Produktion oder nach einer Umrüstung oder nach einem Produktionswechsel etc. befinden sich alle Elemente, wie Aggregate, in einem bestimmten Zustand, insbesondere in einer bestimmten Position, also Drehstellung, oder drehen sich mit einer bestimmten Geschwindigkeit. Dabei sieht die Erfindung vor, dass zumindest ein Falzapparat A, B, von seinem Initialzustand 14 ausgehend, auf eine (insbesondere übergeordnete) Leitachse 12, 13, vorzugsweise dynamisch, aufsynchronisiert. Dies bedeutet, dass der entsprechende Falzapparat - also sein Antrieb, d.h. sein Antriebsregler 29 und Elektromotor 23 - durch Ausgleichsbewegungen seinen Initialzustand an die Sollwertvorgaben der Leitachse 12, 13 angleicht. Dies kann bei Bewegung des Falzapparates A, B erfolgen. Der Falzapparat A, B gleicht seinen Initialzustand 14 damit an die Sollwertvorgaben der Leitachse 12, 13 an, so dass der Falzapparat und - nach Synchronisation aller anderen, synchronisatiohsrelevanten Elemente - Falzapparat und die anderen Elemente der Rotationsdruckmaschine 1 im Sinne der Maschinenkonfiguration synchron laufen und somit ein zufrieden stellendes Druck- und/oder Bearbeitungsergebnis erzielt wird.

In dem Initialzustand 14 sind die Leitachse 12, 13 einerseits und Stellung und/oder Bewegungszustand des Falzapparates A, B andererseits voneinander unabhängig. Dies bedeutet insbesondere, dass die Erfindung auch bei praktisch beliebig vielen Falzen, wie zum Beispiel bei geteilter Materialbahn (nicht gezeigt), deren Teile in zwei unterschiedliche Falzapparate geführt werden, eingesetzt werden kann.

Den Vorgang des Aufsynchronsierens zeigt beispielhaft Figur 2. Dort wird - ausgehend von einem Initial-Bewegungszustand 28 (der hier lediglich der Einfachheit halber auf der Abszisse, also der Zeitachse t, startet) - eine gegenüber der Leitachse 12, 13 erhöhte Geschwindigkeit gefahren und insbesondere erhöht, bis eine gegenüber der Leitachse 12, 13 erhöhte Geschwindigkeit erreicht ist. Diese leicht erhöhte Geschwindigkeit wird beibehalten und anschließend - gemäß dem Ausgleichs-Bewegungsverlauf 27 - an die Geschwindigkeit der (vorzugsweise virtuellen) Leitachse 12, 13 angepasst. Während dieses Bewegungsprofils hat somit eine Geschwindigkeitssynchronisation stattgefunden. Je nach Anforderungen (reine Transportaggregate bzw. Bearbeitungs- oder Druckaggregate) ist eine Geschwindigkeitssynchronisation bzw. eine Positionssynchronisation erforderlich bzw. ausreichend.

Diese Geschwindigkeits- und/oder Winkelbzw. Positionssynchronisation hat in Figur 2 während des Ausgleichs-Bewegungsintervalls 26 stattgefunden.

Erfindungsgemäß vorgesehen ist, dass zumindest während des Aufsynchronisierens des Falzapparates A, B die Transportelemente 6 bis 11, die in diesen Falzapparat A, B transportieren, auf den Falzapparat A, B bezogene, spezifische Sollwertvorgaben 15, 16 erhalten. Diese Sollwertvorgaben weichen von dem Verlauf der zumindest einen Leitachse 12, 13 zumindest zeitweise ab. Die Transportelemente - und vorzugsweise lediglich, d.h. ausschließlich diese Transportelemente 6 bis 11 - folgen diesen spezifischen Sollwertvorgaben 15, 16 zumindest temporär. Während des Aufsynchronisierens des Falzapparates A, B führen diese Transportelemente 6 bis 11 somit eine zu der Bewegung des Falzapparates A, B während des Aufsynchronisierens winkel- (d.h. auch positions-) und/oder geschwindigkeitssynchrone Bewegung aus.

Figur 4 zeigt eine Initialposition 14 zu einem (hier willkürlich gewählten) Zeitpunkt "0", an dem die Ordinate ($\varphi$) die Abszisse (t) schneidet. Dies entspricht einer bestimmten, nicht näher gezeichneten Winkelstellung des Falzapparates A, B. Diese Winkelstellung kann völlig willkürlich sein oder auch aus dem Abstellen während einer vorhergehenden Produktion stammen. Dann kann es auch sein, dass Position der Leitachse 12 und Initialstellung des Falzapparates 14 übereinstimmen. Hier ist jedoch ein Fall gezeigt, in dem dies nicht der Fall ist.

Ausgehend von diesem Initialzustand 14 synchronisiert der Falzapparat A, B auf die (vorzugsweise virtuelle) Leitachse 12 auf, wobei er kurz vor Erreichen der hier willkürlich angegebenen Obergrenze des Wertebereichs der Leitachsen 12, 13, 15, 16 praktisch synchron mit der Leitachse 12 läuft. Die Obergrenze des Wertebereichs 31 könnte zum Beispiel 360 Grad bzw. eine digital aufgelöste (quantisierte) Repräsentation dieser Gradzahl sein; bei Multitum-Leitachsen können je nach Auflösung dadurch auch sehr hohe Umdrehungszahlen repräsentiert sein. Alle Gradzahlen, Obergrenzen, Synchronisationsverhalten sowie Kurvenverläufe sind hier lediglich zu Erläuterungszwecken grob schematisch wiedergegeben und können von den wiedergegebenen Verläufen bei einer tatsächlichen Rotationsdruckmaschine abweichen.

Lediglich prinzipiell soll zum Beispiel in Figur 4 gezeigt werden, dass die spezifischen Sollwertvorgaben 16 (also eine "Hilfsleitachse") zu irgendeinem Zeitpunkt auf die Leitachse 12 aufsynchronisiert sind; zu diesem Zeitpunkt ist auch der Falzapparat auf die Leitachse 12 aufsynchronisiert. Da die Transportelemente 6 bis 11 in der Figur 4 den auf den Falzapparat bezogenen, spezifischen Sollwertvorgaben 16 folgen, sind diese auch während des Aufsynchronisierens des Falzapparates A, B auf die Leitachse 12 mit dem Falzapparat A, B synchron. Dadurch werden zu hohe Spannungen, Bahnrisse oder Bahn-Verschlappungen vermieden, wenn während des Aufsynchronisierens des Falzapparates A, B die Materialbahnen A1, A2, A3; B1, B2 bereits in die Transportelemente 6 bis 11 eingespannt sind bzw. von diesen bereits transportiert werden. Der Druckspalt zwischen den einander gegenüberliegenden Druckzylindern der Druckwerke 2, 3, kann während des Aufsynchronisierens offen sein, d.h. die Materialbahn A1, A2, A3; B1, B2 wird frei durch die Druckwerke 2, 3 bzw. die Druckwerksgruppen 4, 5 geführt.

Des weiteren gezeigt in Figur 4 ist, dass der Falzapparat A, B mit einer Rampe, d.h. mit einem "weichen", insbesondere ruckfreien und mit lediglich geringer Anfangsbeschleunigung versehenen Verlauf aufsynchronisiert. Entsprechend werden auch die spezifischen Sollwertvorgaben 16 für die Transportelemente 6 bis 11 geführt.

Ein anderer Zustand ist die rechte Kurve 16 in Figur 4; diese zeigt, dass der Falzapparat A, B auch zu einem späteren Zeitpunkt, in welchem die virtuelle Leitachse 12 bereits gestartet und völlig hochgefahren ist, mit dem Aufsynchronisieren beginnen kann. Im übrigen wird auch die Leitachse 12 zur Vermeidung unnötig hoher Anfangsbeschleunigungen und eines unnötig hohen bzw. schädlichen Rucks ebenfalls mit einer Rampe entsprechend der obigen Ausführungen gestartet.

Figur 4 zeigt eine spezifische Sollwertvorgabe 16, die zum Beispiel beim Aufsynchronisieren des Falzes A, B aus dem Istwert eines Positionsgebers 17 des Falzapparates A, B kontinuierlich gebildet wird. Dabei sind in der Darstellung alle eingangs genannten Winkelbezüge, Offsets und weitere Beziehungen von Winkeln, Positionen und Geschwindigkeiten hier bei dieser Darstellung der Einfachheit halber ignoriert.

Schließlich zeigt die Figur 3 eine spezifische Sollwertvorgabe 15, die eine - neben der virtuellen Leitachse 13 - bestehende, weitere virtuelle Leitachse 15 beinhaltet. Diese Leitachse 15 kann zum Beispiel mit einem Anfangswert eines Falzapparates A, B (ebenfalls mit einer Rampe) gestartet werden. Den spezifischen Sollwertvorgaben dieser weiteren, virtuellen Leitachse 15 kann der Falzapparat A, B selber sowie können dessen jeweils zugeordnete Transportelemente 6 bis 11 folgen. Durch die Initialisierung der spezifischen Sollwertvorgaben 15 mit der Initialstellung des Falzapparates A, B (zum Beispiel von dessen Positionsgeber 17) ist der Falzapparat A, B sofort mit den spezifischen Sollwertvorgaben 15 synchron. Desgleichen sind auch alle den spezifischen Sollwertvorgilben 15 folgende Transportelemente untereinander und mit dem Falz A, B synchron. Diese spezifischen Sollwertvorgaben werden dann an die (insbesondere virtuelle) Leitachse 13 angeglichen (dies ist ganz rechts in Figur 3 gezeigt, wobei der synchrone Zustand wiederum kurz vor Erreichen der Obergrenze 31 des Wertebereichs eingenommen wird. Dies zeigt, dass auch eine virtuelle Leitachse erzeugt werden kann (15), welche zunächst Falzapparat A, B sowie die dazugehörigen Transportelemente 6 bis 11 "mitnimmt", aufeinander aufsynchronisiert und dann diese weitere virtuelle Leitachse 15 wiederum auf die andere virtuelle Leitachse 13 (die "übergeordnete" Leitachse 13) aufsynchronisieren kann.

Während des Aufsynchroniservorgangs können die Druckspalte - wie bereits oben gesagt - insbesondere die Druckspalte der in den betreffenden, aulsynchronisierenden Falzapparat A, B arbeitenden Druckwerke geöffnet sein. Die Parameter werden vorzugsweise von dem übergeordneten Leitsystem 20, 21 - hier Leitstände 20, 21 - vorgegeben über den Kommunikationsstrang 30. Desgleichen wird der zumindest eine Falzapparat A, B, welcher überhaupt aufsynchronisiert, und insbesondere wie, mit welcher Rampe, mit welcher Geschwindigkeit, mit welcher Maximalgeschwindigkeit etc. dieser aufsynchronisiert von dem übergeordneten Leitsystem 20, 21 vorgegeben. Dies ist zum Beispiel in der SPS-(speicherprogrammierbaren) Steuerung des jeweiligen Leitsystems 20, 21 programmiert.

Bezugszeichenliste

| | |
|---|---|
| 1. | Rotationsdiuckmaschine |
| A1, A2, A3 | Materialbahnen |
| B1, B2 | Materialbahnen |
| 2. | Druckwerk |
| 3. | Druckwerk |
| 4. | Druckwerksgruppe |
| 5. | Druckwerksgruppe |
| A | Falzapparat |
| B | Falzapparat |
| 6. | Rollenwechsler |
| 7. | Einzugswerk |
| 8. | Einzugswerk |
| 9. | Zugwalze |
| 10. | Zugwalze |
| 11. | Strangzugwalze |
| 12. | Leitachse |
| 13. | Leitachse |
| 14. | Initialzustand |
| 15. | spezifische Sollwertvorgaben |
| 16. | spezifische Sbllwetrtvorgaben |
| 17. | Positionsgeber |
| 18. | Antriebssteuerung |
| 19. | Antriebssteuerung |
| 20. | Leitsystem / Leitstand |
| 21. | Leitsystem / Leitstand |
| 22. | Antriebsregler (der Transportelemente) |
| 23. | Elektromotor |
| 24. | Bus |
| 25. | Bus |
| 26. | Ausgleichs-Bewegungsintervall |
| 27. | Ausgleichsbewegung |
| 28. | Initial-Bewegungszustand |
| 29. | Antriebsregler des Falzapparates |
| 30. | Kommunikationsstrang |
| 31. | Obergrenze des Wertebereichs |

**Patentansprüche**

**1.** Verfahren des Betriebs einer Rotationsdruckmaschine (1), welche zumindest eine Materialbahn (A1, A2, A3; B1, B2) bedruckt und bearbeitet, mit Druckwerken (2, 3) und/oder Druckwerksgruppen (4, 5), mit zumindest einem Falzapparat (A, B), und mit Transportelementen (6, 7, 8, 9, 10, 11) zum Transport der zumindest einen Materialbahn (A1, A2, A3; B1, B2) durch die Rotationsdruckmaschine (1) in den zumindest einen Falzapparat (A, B), wobei der zumindest eine Falzapparat (A, B), die Druckwerke (2, 3) und/oder Druckwerksgruppen (4, 5) und die Transportelemente (6, 7, 8, 9, 10, 11) zumindest teilweise mechanisch unabhängig voneinander elektrisch angetrieben und im Druckbetrieb durch Sollwertvorgaben zumindest einer Leitachse (12, 13) mit einem elektronisch generierten Synchronisationstakt synchronisiert werden,
**dadurch gekennzeichnet, dass** zumindest ein Falzapparat (A, B) von einem Initialzustand (14) ausgehend, in welchem die Leitachse (12, 13) einerseits und die Stellung und/oder der Bewegungszustand des Falzapparates (A, B) andererseits voneinander unabhängig sind, durch Ausgleichsbewegungen an die Sollwertvorgaben der Leitachse (12, 13) aufsynchronisiert, <u>indem der Falzapparat (A,B) seinen Initialzustand (14) an die Sollwertvorgaben der Leitachse (12,13) angleicht</u>.

2. Verfahren nach Anspruch 1, **dadurch gekennzeichnet, dass** zumindest während des Aufsynchronisierens des Falzapparates (A, B) die Transportelemente (6 bis 11), die in diesen Falzapparat (A, B) transportieren, auf den Falzapparat (A, B) bezogene, spezifische Sollwertvorgaben (15, 16) erhalten, die insbesondere von dem Verlauf der Sollwertvorgaben der zumindest einen Leitachse (12,13) zumindest zeitweise abweichen <u>können</u>, und diesen spezifischen Sollwertvorgaben (15, 16) folgen, so dass die Transportelemente (6 bis 11) während des Aufsynchronisierens des Falzapparates (A, B) eine zu dessen Bewegung während des Aufsynchronisierens winkel- und/oder geschwindigkeitssynchrone Bewegung ausführen.

3. Verfahren nach Anspruch 2, **dadurch gekennzeichnet, dass** lediglich diejenigen der Transportelemente (6 bis 11), die in den Falzapparat (A, B) transportieren, die spezifischen Sollwertvorgaben (15, 16) erhalten.

4. Verfahren nach Anspruch 2 oder 3, **dadurch gekennzeichnet, dass** die spezifischen Sollwertvorgaben (15, 16) mit einer Momentanstellung und/oder Momentangeschwindigkeit des Falzapparates (A, B) korrespondieren.

5. Verfahren nach Anspruch 4, **dadurch gekennzeichnet, dass** die spezifischen Sollwertvorgaben (15, 16) aus dem Istwert eines Positionsgebers (17)

des Falzapparates (A, B), insbesondere kontinuierlich, abgeleitet werden.

6. Verfahren nach Anspruch 2 oder 3, **dadurch gekennzeichnet, dass** die spezifischen Sollwertvorgaben (15, 16) aus dem Initialzustand (14) des Falzapparates (A, B) abgeleitet werden.

7. Verfahren nach Anspruch 6, **dadurch gekennzeichnet, dass** die spezifischen Sollwertvorgaben (15, 16) von einer spezifischen Leitachse mit einem elektronisch generierten Synchronisationstakt erzeugt werden, wobei auch der Falzapparat (A, B) der spezifischen Leitachse (15, 16) folgt, und der Startwert der spezifischen Leitachse (15, 16) dem Initialzustand (14) des Falzapparates (A, B) entspricht, und dass die spezifische Leitachse (15, 16) auf die Leitachse (12, 13) dynamisch aufsynchronisiert.

8. Verfahren nach Anspruch 7, **dadurch gekennzeichnet, dass** vor dem Anfahren des Falzapparates (A, B) der Istwert eines Positionsgebers (17) des Falzapparates (A, B) ausgelesen und daraus der Startwert abgeleitet wird, insbesondere dass eine in einer Antriebssteuerung (18, 19) vorhandene Steuerung, insbesondere eine SPS, und/oder ein Leitsystem (20, 21), insbesondere eine SPS des Leitsystems (20, 21), das Auslesen und die Ableitung des Istwertes steuert.

9. Verfahren nach einem der Ansprüche 1 bis 8, **dadurch gekennzeichnet, dass** während des Aufsynchronisierens des Falzapparates (A, B) die entsprechenden Materialbahnen (A1, A2, A3; B1, B2) in die Transportelemente (6, 7, 8, 9, 10, 11) eingeführt sind und die Transportelemente (6, 7, 8, 9, 10, 11) diese Materialbahnen (A1, A2, A3; B1, B2) bereits mittransportieren.

10. Verfahren nach einem der Ansprüche 1 bis 9, **dadurch gekennzeichnet, dass** während des Aufsynchronisierens des Falzapparates (A, B) alle Druckspalte der in diesen Falzapparat (A, B) arbeitenden Druckwerke (2, 3) oder Druckwerksgruppen (4, 5) geöffnet sind und die entsprechenden Materialbahnen (A1, A2, A3; B1, B2) in die Transportelemente (6, 7, 8, 9, 10, 11) eingeführt sind und die Transportelemente (6, 7, 8, 9, 10, 11) diese Materialbahnen (A1, A2, A3; B1, B2) bereits mittransportieren.

11. Verfahren nach Anspruch 10, **dadurch gekennzeichnet, dass** während des Aufsynchronisierens des Falzapparates (A, B) die Druckwerke (2, 3) oder Druckwerksgruppen (4, 5) durch Ausgleichsbewegungen ihren Bewegungszustand und/oder ihre Momentanpositionen an die Sollwertvorgaben der Leitachse (12, 13) angleichen.

**12.** Verfahren nach einem der Ansprüche 1 bis 11, **dadurch gekennzeichnet, dass** nach dem Aufsynchronisieren des Falzapparates (A, B) der Falzapparat (A, B) und die Transportelemente (6, 7, 8, 9, 10, 11), die in diesen Falzapparat (A, B) transportieren, den Sollwertvorgaben der Leitachse (12, 13) folgen.

**13.** Verfahren nach einem der Ansprüche 1 bis 12, **dadurch gekennzeichnet, dass** die Druckmaschinenkonfiguration, der zumindest eine Falzapparat (A, B), welcher aufsynchronisiert, und insbesondere für das Aufsynchronisieren des Falzapparates (A, B) relevante Betriebsparameter, von einem übergeordneten Leitsystem (20, 21) vorgegeben werden.

**14.** Verfahren nach einem oder vorhergehenden Ansprüche, **dadurch gekennzeichnet, dass** der Initialzustand (14) aus dem Abstellen während einer vorhergehenden Produktion stammt, wobei die Position der Leitachse (12) und die Initialstellung des Falzapparates (14) im wesentlichen übereinstimmen.

**15.** Antriebsvorrichtung einer Rotationsdruckmaschine (1), welche dazu ausgelegt ist, zumindest eine Materialbahn (A1, A2, A3; B1, B2) zu bedrucken und zu bearbeiten, mit zumindest einem Falzapparat (A, B), mit Druckwerken (2, 3) und/oder Druckwerksgruppen (4, 5), und mit Transportelementen (6, 7, 8, 9, 10, 11) zum Transport der zumindest einen Materialbahn (A1, A2, A3; B1, B2) durch die Rotationsdruckmaschine (1) in den zumindest einen Falzapparat (A, B), wobei der zumindest eine Falzapparat (A, B), die Druckwerke (2, 3) und/oder Druckwerksgruppen (4, 5) und die Transportelemente (6, 7, 8, 9, 10, 11) zumindest teilweise mechanisch unabhängig voneinander durch Antriebsregler (22) und zugehörige Elektromotoren (23) elektrisch anzutreiben und im Druckbetrieb durch Sollwertvorgaben zumindest einer Leitachse (12, 13) mit einem elektronisch generierten Synchronisationstakt zumindest einer Antriebssteuerung (18, 19) zu synchronisieren sind, die über ein echtzeitfähiges Bussystem (24, 25) von der zumindest einen Antriebssteuerung (18, 19) an andere Antriebssteuerungen (19, 18, 26) und/oder die Antriebsregler (22) zu kommunizieren sind, **dadurch gekennzeichnet, dass** zumindest ein Falzapparat (A, B) durch Ausgleichsbewegungen (27) von einem Initialzustand (14), in welchem die Leitachse (12, 13) einerseits und die Stellung (14) und/oder der Bewegungszustand (28) des Falzapparates (A, B) andererseits voneinander unabhängig sind, an die Sollwertvorgaben der Leitachse (12, 13) aufzusynchronisieren ist, und zumindest eine Antriebssteuerung (18, 19) dazu vorgesehen ist, eine auf den Falzapparat (A, B) bezogene spezifische Leitachse (15, 16) zu erzeugen, die insbesondere von dem Verlauf der Sollwertvorgaben der zumindest einen Leitachse (12, 13) zumindest zeitweise abweicht, und selektiv und zumindest temporär an zumindest einen Antriebsregler (29) des zumindest einen Falzapparates (A, B) und/oder an zumindest einen Antriebsregler (22) der Transportelemente (6, 7, 8, 9, 10, 11), die in den Falzapparat (A, B) transportieren, zu kommunizieren.

**16.** Antriebsvorrichtung nach Anspruch 15, **dadurch gekennzeichnet, dass** die spezifische Leitachse (15, 16) mit einer Momentanstellung und/oder Momentangeschwindigkeit des Falzapparates (A, B) korrespondiert.

**17.** Antriebsvorrichtung nach Anspruch 16, **dadurch gekennzeichnet, dass** die Antriebssteuerung (18, 19) derart ausgelegt ist, dass sie die spezifische Leitachse (15, 16) aus dem Istwert eines Positionsgebers (17) des Falzapparates (A, B), welcher an die Antriebssteuerung (18, 19) zu kommunizieren ist, insbesondere kontinuierlich, abzuleiten vermag.

**18.** Antriebsvorrichtung nach Anspruch 15, **dadurch gekennzeichnet, dass** die spezifische Leitachse (15, 16) aus dem Initialzustand (14) des Falzapparates (A, B) abzuleiten ist.

**19.** Antriebsvorrichtung nach Anspruch 18, **dadurch gekennzeichnet, dass** die spezifische Leitachse (15, 16) aus einem elektronisch generierten Synchronisationstakt zu erzeugen ist, und der Startwert der spezifischen Leitachse (15, 16) dem Initialzustand (14) des Falzapparates (A, B) entspricht, wobei auch der Falzapparat (A, B) der spezifischen Leitachse (15, 16) folgt, und dass die spezifische Leitachse (15, 16) auf die Leitachse (12, 13), insbesondere dynamisch, aufzusynchronisieren ist.

**20.** Antriebsvorrichtung nach Anspruch 19, **dadurch gekennzeichnet, dass** der Istwert eines Positionsgebers (17) des Falzapparates (A, B), vorzugsweise mittels einer SPS, auszulesen, an die Antriebssteuerung (18, 19) zu übertragen und daraus der Startwert abzuleiten ist, insbesondere dass eine in einer Antriebssteuerung (18, 19) vorhandene Steuerung, insbesondere eine SPS, oder ein Leitsystem (20, 21), insbesondere eine SPS des Leitsystems, das Auslesen und die Ableitung des Istwertes steuert.

**21.** Antriebsvorrichtung nach einem der Ansprüche 15 bis 20, **dadurch gekennzeichnet, dass** die Druckmaschinenkonfiguration und der zumindest eine Falzapparat (A, B), welcher dynamisch aufzusynchronisieren ist, und insbesondere für das Aufsynchronisieren des Falzapparates (A, B) relevante Betriebsparameter, von einem übergeordneten Leitsystem (20, 21) vorzugeben sind.

**22.** Rotationsdruckmaschine (1) mit einer Antriebsvorrichtung nach einem der Ansprüche 15 bis 21, insbesondere zur Ausführung des Verfahrens nach einem der Ansprüche 1 bis 14.

## Claims

**1.** Method for operating a rotary printing press (1) which prints and processes at least one web of material (A1, A2, A3; B1, B2), with printing units (2, 3) and/or printing unit groups (4, 5) with at least one folding apparatus (A, B), and with transporting elements (6, 7, 8, 9, 10, 11) for transporting the at least one web of material (A1, A2, A3; B1, B2) through the rotary printing press (1) into the at least one folding apparatus (A, B), wherein the at least one folding apparatus (A, B), the printing units (2, 3) and/or printing unit groups (4, 5) and the transporting elements (6, 7, 8, 9, 10, 11) are electrically driven at least partially mechanically independently of one another, and in the printing mode are synchronized with an electronically generated synchronization clock by means of predefined setpoint values of at least one master axis (12, 13),
**characterized in that** at least one folding apparatus (A, B) synchronizes, starting from an initial state (14) in which the master axis (12, 13) on the one hand, and the position and/or the state of movement of the folding apparatus (A, B), on the other, are independent of one another, with the predefined setpoint values of the master axis (12, 13) by means of compensating movements by the folding apparatus (A, B) adjusting its initial state (14) to the predefined setpoint values of the master axis (12, 13).

**2.** Method according to Claim 1, **characterized in that**, at least during the synchronizing of the folding apparatus (A, B), the transporting elements (6 to 11), which transport into this folding apparatus (A, B), receive specific predefined setpoint values (15, 16) which are related to the folding apparatus (A, B) and which can at least temporarily deviate in particular from the profile of the predefined setpoint values of the at least one master axis (12, 13) and follow these specific predefined setpoint values (15, 16), with the result that during the synchronizing of the folding apparatus (A, B) the transporting elements (6 to 11) carry out a movement which is synchronous with the angle and/or speed of the movement of said folding apparatus (A, B) during the synchronizing process.

**3.** Method according to Claim 2, **characterized in that** only those transporting elements of the transporting elements (6 to 11) which transport into the folding apparatus (A, B) receive the specific predefined setpoint values (15, 16).

**4.** Method according to Claim 2 or 3, **characterized in that** the specific predefined setpoint values (15, 16) correspond with an instantaneous position and/or instantaneous speed of the folding apparatus (A, B).

**5.** Method according to Claim 4, **characterized in that** the specific predefined setpoint values (15, 16) are derived from the actual value of a position transmitter (17) of the folding apparatus (A, B), in particular continuously.

**6.** Method according to Claim 2 or 3, **characterized in that** the specific predefined setpoint values (15, 16) are derived from the initial state (14) of the folding apparatus (A, B).

**7.** Method according to Claim 6, **characterized in that** the specific predefined setpoint values (15, 16) are generated by a specific master axis with an electronically generated synchronization clock, wherein the folding apparatus (A, B) also follows the specific master axis (15, 16), and the starting value of the specific master axis (15, 16) corresponds to the initial state (14) of the folding apparatus (A, B), and **in that** the specific master axis (15, 16) synchronizes dynamically with the master axis (12, 13).

**8.** Method according to Claim 7, **characterized in that** before the folding apparatus (A, B) starts, the actual value of a position transmitter (17) of the folding apparatus (A, B) is read out and the starting value derived therefrom, in particular **in that** a controller which is present in a drive controller (18, 19), in particular an SPS, and/or a control system (20, 21), in particular an SPS of the control system (20, 21), controls the reading out and the derivation of the actual value.

**9.** Method according to one of Claims 1 to 8, **characterized in that** during the synchronizing of the folding apparatus (A, B), the corresponding webs of material (A1, A2, A3; B1, B2) were introduced into the transporting elements (6, 7, 8, 9, 10, 11), and the transporting elements (6, 7, 8, 9, 10, 11) already transport along these webs of material (A1, A2, A3; B1, B2).

**10.** Method according to one of Claims 1 to 9, **characterized in that** during the synchronizing of the folding apparatus (A, B), all the printing nips of the printing units (2, 3) or printing unit groups (4, 5) which operate into this folding apparatus (A, B) were opened, and the corresponding webs of material (A1, A2, A3; B1, B2) were introduced into the transporting elements (6, 7, 8, 9, 10, 11), and the transporting elements (6, 7, 8, 9, 10, 11) already transport along these webs of material (A1, A2, A3; B1, B2).

**11.** Method according to Claim 10, **characterized in**

**that** during the synchronizing of the folding apparatus (A, B), the printing units (2, 3) or printing unit groups (4, 5) adjust their state of movement and/or their instantaneous positions to the predefined setpoint values of the master axis (12, 13) by means of compensating movements.

12. Method according to one of Claims 1 to 11, **characterized in that** after the synchronizing of the folding apparatus (A, B), the folding apparatus (A, B) and the transporting elements (6, 7, 8, 9, 10, 11) which transport into this folding apparatus (A, B) follow the predefined setpoint values of the master axis (12, 13).

13. Method according to one of Claims 1 to 12, **characterized in that** the printing press configuration, the at least one folding apparatus (A, B) which synchronizes and, in particular, relevant operating parameters for the synchronizing of the folding apparatus (A, B) are predefined by a superordinate control system (20, 21).

14. Method according to one of the preceding claims, **characterized in that** the initial state (14) originates from the deactivation during a preceding production process, wherein the position of the master axis (12) and the initial position of the folding apparatus (14) substantially correspond.

15. Drive device of a rotary printing press (1) which is configured to print and to process at least one web of material (A1, A2, A3; B1, B2), with at least one folding apparatus (A, B), with printing units (2, 3) and/or printing unit groups (4, 5) and with transporting elements (6, 7, 8, 9, 10, 11) for transporting the at least one web of material (A1, A2, A3; B1, B2) through the rotary printing press (1) into the at least one folding apparatus (A, B), wherein the at least one folding apparatus (A, B), the printing units (2, 3) and/or printing unit groups (4, 5) and the transporting elements (6, 7, 8, 9, 10, 11) are to be electrically driven at least partially mechanically independently of one another by drive regulators (22) and associated electric motors (23), and in the printing mode are to be synchronized with an electronically generated synchronization clock of at least one drive controller (18, 19) by means of predefined setpoint values of at least one master axis (12, 13), which predefined setpoint values are to be communicated by the at least one drive controller (18, 19) to other drive controllers (19, 18, 26) and/or to the drive regulators (22) via a bus system (24, 25) capable of operating in real time, **characterized in that** at least one folding apparatus (A, B) is to be synchronized with the predefined setpoint values of the master axis (12, 13) by means of compensating movements (27) from an initial state (14) in which the master axis (12, 13),

on the one hand, and the position (14) and/or the state of movement (28) of the folding apparatus (A, B), on the other, are independent of one another, and at least one drive controller (18, 19) is provided for generating a specific master axis (15, 16) which is related to the folding apparatus (A, B) and which at least temporarily deviates, in particular, from the profile of the predefined setpoint values of the at least one master axis (12, 13), and to communicate said specific master axis (15, 16) selectively and at least temporarily to at least one drive regulator (29) of the at least one folding apparatus (A, B) and/or to at least one drive regulator (22) of the transporting elements (6, 7, 8, 9, 10, 11) which transport into the folding apparatus (A, B).

16. Drive device according to Claim 15, **characterized in that** the specific master axis (15, 16) corresponds to an instantaneous position and/or instantaneous speed of the folding apparatus (A, B).

17. Drive device according to Claim 16, **characterized in that** the drive controller (18, 19) is configured in such a way that it is capable of deriving, in particular continuously, the specific master axis (15, 16) from the actual value of a position transmitter (17) of the folding apparatus (A, B), which actual value is to be communicated to the drive controller (18, 19).

18. Drive device according to Claim 15, **characterized in that** the specific master axis (15, 16) is to be derived from the initial state (14) of the folding apparatus (A, B).

19. Drive device according to Claim 18, **characterized in that** the specific master axis (15, 16) is to be generated from an electronically generated synchronization clock, and the starting value of the specific master axis (15, 16) corresponds to the initial state (14) of the folding apparatus (A, B), wherein the folding apparatus (A, B) also follows the specific master axis (15, 16), and **in that** the specific master axis (15, 16) is to be synchronized with the master axis (12, 13), in particular dynamically.

20. Drive device according to Claim 19, **characterized in that** the actual value of a position transmitter (17) of the folding apparatus (A, B) is to be read out, preferably by means of an SPS and transmitted to the drive controller (18, 19), and the starting value is to be derived therefrom, in particular **in that** a controller present in a drive controller (18, 19), in particular an SPS, or a control system (20, 21), in particular an SPS of the control system, controls the reading out and the derivation of the actual value.

21. Drive device according to one of Claims 15 to 20, **characterized in that** the printing press configuration and the at least one folding apparatus (A, B) which is to be synchronized dynamically, and operating parameters which are relevant, in particular, for the synchronizing of the folding apparatus (A, B), are to be predefined by a superordinate control system (20, 21).

22. Rotary printing press (1) with a drive device according to one of Claims 15 to 21, in particular for carrying out the method according to one of Claims 1 to 14.

## Revendications

1. Procédé de fonctionnement d'une presse rotative (1), qui imprime et traite au moins une bande de matériau (A1, A2, A3 ; B1, B2), comprenant des éléments d'impression (2, 3) et/ou des groupes d'éléments d'impression (4, 5), comprenant au moins un appareil de pliage (A, B), et comprenant des éléments de transport (6, 7, 8, 9, 10, 11) pour le transport de l'au moins une bande de matériau (A1, A2, A3 ; B1, B2) à travers la presse rotative (1) dans l'au moins un appareil de pliage (A, B), l'au moins un appareil de pliage (A, B), les éléments d'impression (2, 3) et/ou les groupes d'éléments d'impression (4, 5) et les éléments de transport (6, 7, 8, 9, 10, 11) étant entraînés électriquement indépendamment les uns des autres de manière au moins en partie mécanique et étant synchronisés pendant l'opération d'impression par des valeurs de consigne prédéfinies d'au moins un axe maître (12, 13) avec une cadence de synchronisation générée électroniquement, **caractérisé en ce qu'**au moins un appareil de pliage (A, B), à partir d'un état initial (14), dans lequel l'axe maître (12, 13) d'une part et la position et/ou l'état de déplacement de l'appareil de pliage (A, B) d'autre part sont indépendants l'un de l'autre, se synchronise, par des mouvements de compensation, aux valeurs de consigne prédéfinies de l'axe maître (12, 13), par le fait que l'appareil de pliage (A, B) ajuste son état initial (14) aux valeurs de consigne prédéfinies de l'axe maître (12, 13).

2. Procédé selon la revendication 1, **caractérisé en ce qu'**au moins pendant la synchronisation de l'appareil de pliage (A, B), les éléments de transport (6 à 11), qui transportent dans cet appareil de pliage (A, B), reçoivent des valeurs de consigne prédéfinies spécifiques (15, 16) se rapportant à l'appareil de pliage (A, B), lesquelles peuvent au moins temporairement s'écarter notamment de la courbe des valeurs de consigne prédéfinies de l'au moins un axe maître (12, 13), et suivent ces valeurs de consigne prédéfinies spécifiques (15, 16) de telle sorte que les éléments de transport (6 à 11), pendant la synchronisation de l'appareil de pliage (A, B), effectuent un mouvement avec un angle et/ou une vitesse synchronisé(e) avec le mouvement de l'appareil de pliage pendant la synchronisation.

3. Procédé selon la revendication 2, **caractérisé en ce que** seulement les éléments de transport (6 à 11) qui transportent dans l'appareil de pliage (A, B) reçoivent les valeurs de consigne prédéfinies spécifiques (15, 16).

4. Procédé selon la revendication 2 ou 3, **caractérisé en ce que** les valeurs de consigne prédéfinies spécifiques (15, 16) correspondent à une position instantanée et/ou à une vitesse instantanée de l'appareil de pliage (A, B).

5. Procédé selon la revendication 4, **caractérisé en ce que** les valeurs de consigne prédéfinies spécifiques (15, 16) sont déduites de la valeur actuelle d'un détecteur de position (17) de l'appareil de pliage (A, B), en particulier en continu.

6. Procédé selon la revendication 2 ou 3, **caractérisé en ce que** les valeurs de consigne prédéfinies spécifiques (15, 16) sont déduites de l'état initial (14) de l'appareil de pliage (A, B).

7. Procédé selon la revendication 6, **caractérisé en ce que** les valeurs de consigne prédéfinies spécifiques (15, 16) d'un axe maître spécifique sont produites avec une cadence de synchronisation générée électroniquement, l'appareil de pliage (A, B) suivant aussi l'axe maître spécifique (15, 16), et la valeur de départ de l'axe maître spécifique (15, 16) correspondant à l'état initial (14) de l'appareil de pliage (A, B), et **en ce que** l'axe maître spécifique (15, 16) est synchronisé dynamiquement avec l'axe maître (12, 13).

8. Procédé selon la revendication 7, **caractérisé en ce que** la valeur actuelle d'un capteur de position (17) de l'appareil de pliage (A, B) est lue avant le démarrage de l'appareil de pliage (A, B), et l'on en déduit la valeur de départ, en particulier en ce qu'une commande prévue dans une commande d'entraînement (18, 19), en particulier une commande SPS (à mémoire programmable), et/ou un système maître (20, 21), en particulier une commande SPS du système maître (20, 21), commande la lecture et la déduction de la valeur actuelle.

9. Procédé selon l'une quelconque des revendications 1 à 8, **caractérisé en ce que** pendant la synchronisation de l'appareil de pliage (A, B), les bandes de matériau correspondantes (A1, A2, A3 ; B1, B2) sont introduites dans les éléments de transport (6, 7, 8, 9, 10, 11) et les éléments de transport (6, 7, 8, 9, 10, 11) transportent déjà avec eux ces bandes de matériau (A1, A2, A3 ; B1, B2).

**10.** Procédé selon l'une quelconque des revendications 1 à 9, **caractérisé en ce que** pendant la synchronisation de l'appareil de pliage (A, B), tous les interstices d'impression des éléments d'impression (2, 3) ou des groupes d'éléments d'impression (4, 5) fonctionnant dans cet appareil de pliage (A, B) sont ouverts et les bandes de matériau correspondantes (A1, A2, A3 ; B1, B2) sont introduites dans les éléments de transport (6, 7, 8, 9, 10, 11) et les éléments de transport (6, 7, 8, 9, 10, 11) transportent déjà avec eux ces bandes de matériau (A1, A2, A3 ; B1, B2).

**11.** Procédé selon la revendication 10, **caractérisé en ce que** pendant la synchronisation de l'appareil de pliage (A, B), les éléments d'impression (2, 3) ou les groupes d'éléments d'impression (4, 5) ajustent, par des mouvements de compensation, leur état de déplacement et/ou leurs positions actuelles aux valeurs de consigne prédéfinies de l'axe maître (12, 13).

**12.** Procédé selon l'une quelconque des revendications 1 à 11, **caractérisé en ce que** l'appareil de pliage (A, B) et les éléments de transport (6, 7, 8, 9, 10, 11) qui transportent dans cet appareil de pliage (A, B) suivent les valeurs de consigne prédéfinies de l'axe maître (12, 13), après la synchronisation de l'appareil de pliage (A, B).

**13.** Procédé selon l'une quelconque des revendications 1 à 12, **caractérisé en ce que** la configuration de la presse de l'au moins un appareil de pliage (A, B), qui se synchronise, et notamment les paramètres de fonctionnement pertinents pour la synchronisation de l'appareil de pliage (A, B), sont prédéfinis par un système maître subordonné (20, 21).

**14.** Procédé selon l'une quelconque des revendications précédentes, **caractérisé en ce que** l'état initial (14) provient de l'arrêt pendant un production précédente, la position de l'axe maître (12) et la position initiale de l'appareil de pliage (14) coïncidant essentiellement.

**15.** Dispositif d'entraînement d'une presse rotative (1) qui est conçue pour imprimer et traiter au moins une bande de matériau (A1, A2, A3 ; B1, B2), comprenant au moins un appareil de pliage (A, B), comprenant des éléments d'impression (2, 3) et/ou des groupes d'éléments d'impression (4, 5), et comprenant des éléments de transport (6, 7, 8, 9, 10, 11) pour le transport de l'au moins une bande de matériau (A1, A2, A3 ; B1, B2) à travers la presse rotative (1) dans l'au moins un appareil de pliage (A, B), l'au moins un appareil de pliage (A, B), les éléments d'impression (2,3) et/ou les groupes d'éléments d'impression (4, 5) et les éléments de transport (6, 7, 8, 9, 10, 11) devant être entraînés électriquement indépendamment les uns des autres de manière au moins en partie mécanique par des régulateurs d'entraînement (22) et des moteurs électriques associés (23) et devant être synchronisés pendant l'opération d'impression par des valeurs de consigne prédéfinies d'au moins un axe maître (12, 13) avec une cadence de synchronisation générée électroniquement d'au moins une commande d'entraînement (18, 19), et devant communiquer par le biais d'un système de bus en temps réel (24, 25) depuis l'au moins une commande d'entraînement (18, 19) à d'autres commandes d'entraînement (19, 18, 26) et/ou aux régulateurs d'entraînement (22), **caractérisé en ce qu'**au moins un appareil de pliage (A, B) doit être synchronisé, par des mouvements de compensation, (27) depuis un état initial (14) dans lequel l'axe maître (12, 13) d'une part et la position (14) et/ou l'état de déplacement (28) de l'appareil de pliage (A, B) d'autre part sont indépendants l'un de l'autre, aux valeurs de consigne prédéfinies de l'axe maître (12, 13), et au moins une commande d'entraînement (18, 19) est prévue pour produire un axe maître spécifique (15, 16) se rapportant à l'appareil de pliage (A, B), lequel axe maître s'écarte au moins temporairement notamment de la courbe des valeurs de consigne prédéfinies de l'au moins un axe maître (12, 13), et pour le communiquer de manière sélective et au moins temporaire à au moins un régulateur d'entraînement (29) de l'au moins un appareil de pliage (A, B) et/ou à au moins un régulateur d'entraînement (22) des éléments de transport (6, 7, 8, 9, 10, 11), qui transportent dans l'appareil de pliage (A, B).

**16.** Dispositif d'entraînement selon la revendication 15, **caractérisé en ce que** l'axe maître spécifique (15, 16) correspond à une position instantanée et/ou à une vitesse instantanée de l'appareil de pliage (A, B).

**17.** Dispositif d'entraînement selon la revendication 16, **caractérisé en ce que** la commande d'entraînement (18, 19) est conçue de telle sorte qu'elle permette de déduire, en particulier en continu, l'axe maître spécifique (15, 16) à partir de la valeur actuelle d'un capteur de position (17) de l'appareil de pliage (A, B) qui doit être communiquée à la commande d'entraînement (18, 19).

**18.** Dispositif d'entraînement selon la revendication 15, **caractérisé en ce que** l'axe maître spécifique (15, 16) doit être déduit de l'état initial (14) de l'appareil de pliage (A, B).

**19.** Dispositif d'entraînement selon la revendication 18, **caractérisé en ce que** l'axe maître spécifique (15, 16) doit être généré à partir d'une cadence de synchronisation générée électroniquement, et la valeur de départ de l'axe maître spécifique (15, 16) correspond à l'état initial (14) de l'appareil de pliage (A, B), l'appareil de pliage (A, B) suivant aussi l'axe maître spécifique (15, 16), et **en ce que** l'axe maître spécifique (15, 16) doit être synchronisé à l'axe maître (12, 13), notamment de manière dynamique.

20. Dispositif d'entraînement selon la revendication 19, **caractérisé en ce que** la valeur actuelle d'un capteur de position (17) de l'appareil de pliage (A, B) doit être lue de préférence au moyen d'une commande SPS, transmise à la commande d'entraînement (18, 19) et l'on doit en déduire la valeur de départ, en particulier **en ce qu'**une commande prévue dans une commande d'entraînement (18, 19), en particulier une commande SPS, ou un système maître (20, 21), en particulier une commande SPS du système maître, commande la lecture et la déduction de la valeur actuelle.

21. Dispositif d'entraînement selon l'une quelconque des revendications 15 à 20, **caractérisé en ce que** la configuration de la presse et de l'au moins un appareil de pliage (A, B), qui peut être synchronisé dynamiquement, et notamment les paramètres de fonctionnement pertinents pour la synchronisation de l'appareil de pliage (A, B), doivent être prédéfinis par un système maître subordonné (20, 21).

22. Presse rotative (1) comprenant un dispositif d'entraînement selon l'une quelconque des revendications 15 à 21, en particulier pour mettre en oeuvre le procédé selon l'une quelconque des revendications 1 à 14.

Prinzipieller Aufbau eines wellenlosen Antriebssystem für zwei Teilmaschinen A+B (Sektionen) mit jeweils mehren Bahnen mit Sektions-Bewegungssteuerungen und Gruppensteuerungen

Bahn A1

Bahn A2

Bahn A3

Bahn B1

Bahn B2

Falz A

Falz B

$\Phi_{LA}$ B  $\Phi_{LA}$ A  $\Phi_{LA}$ A  $\Phi_{LA}$ A  $\Phi_{LA}$ B  $\Phi_{LA}$ B  $\Phi_{LA}$ B

Schnelle Echtzeit Busse

Sektions- und Gruppensteuerungen

Datenbus

$\Delta\Phi_i$

$\Delta\Phi_i$

Virtuelle Leitachse der Produktion A = $\Phi_{LA}$ A Sollwert (Referenz) für alle Antriebe an allen Bahnen die in den Falz A

Virtuelle Leitachse der Produktion B = $\Phi_{LA}$ B Sollwert (Refernz) für alle Antriebe an allen Bahnen die in den Falz B laufen

Produktion A

Produktion B

Leitstände

Fig. 1

EP 1 772 263 B1

Fig. 4

Fig. 3

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0930552 A2
- DE 10243454 B4